# EUROPEAN PATENT APPLICATION

(11) **EP 4 772 783 A1**
(43) Date of publication of application: **08.07.2026**
(21) Application number: 24859119.0
(22) Date of filing: 24.06.2024
(51) Int. Cl.: F16K 31/68

(54) **THERMOSTAT DEVICE**

(30) Priority: 31.08.2023 JP 2023141850
(71) Applicant: Nippon Thermostat Co., Ltd., Kiyose-shi Tokyo 204-0003 (JP)
(72) Inventor: NISHINO Yoshinori, Kiyose-shi, Tokyo 204-0003 (JP)
(74) Representative: Samson & Partner Patentanwälte mbB
(86) International application number: PCT/JP2024/022747
(87) International publication number: WO 2025/047073

(57) **Abstract**

Provided is a thermostat device which easily allows dimensional tolerances of components, which is easy to assemble, install, and replace, and in which a thermostat and a differential pressure valve are integrated. A thermostat device 1 includes a thermostat 10 for opening/closing a main passage, a differential pressure valve 20 for opening/closing a bypass passage, and a coupling unit 26 that couples the thermostat 10 and the differential pressure valve 20. The coupling unit 26 includes a holder 27 fixed to an inner periphery of the second valve seat member 21 of the differential pressure valve 20, a flange 27b protruding outward from the holder 27, an engagement part 19a provided in the frame 19 of the thermostat 10 for engaging the flange 27b, and a holder-biasing member 18 that biases the holder 27 toward a direction keeping the flange 27b engaged with the engagement part 19a.

## Description

### TECHNICAL FIELD

The present invention relates to a thermostat device and particularly to a thermostat device in which a thermostat and a differential pressure valve are coupled.

### BACKGROUND ART

Patent Literature 1 discloses an engine coolant circuit that includes a main passage circulating a coolant between an engine and a radiator, a bypass passage bypassing the radiator and connected in parallel to the main passage, a thermostat installed at a branch point of the two passages, and a car heater passage bypassing the radiator and connected in parallel to the main passage. The thermostat includes a main passage valve and a bypass passage valve that selectively opens the main passage or the bypass passage based on detection of the coolant temperature.

The thermostat is further coupled integrally to a flow control valve. When the bypass passage valve is in a position to open the bypass passage, the valve opening degree of the flow control valve is determined by the balance between the biasing force of a spring, which biases the valve port facing an inlet of the bypass passage in a direction to close it from the bypass passage side, and the pressure of the coolant.

To integrate the flow control valve with the thermostat, a rod is fixed by welding or bonding to a bottom wall of a wax-filled pellet body of the thermostat, and the rod is fitted into the central hole of the flow control valve. The flow control valve is guided by the rod and can move up and down within a case fixed by welding or other means to the bottom of a cylindrical case of the thermostat. However, this structure has a problem that it is difficult to allow the dimensional tolerance of each component.

### RELATED ART DOCUMENT

### PATENT LITERATURE

Patent Literature 1: Japanese Examined Utility Model Application Publication No. 62-15470

### SUMMARY OF INVENTION

### TECHNICAL PROBLEM

The present invention has an object to provide a thermostat device, which easily allows dimensional tolerance of components, which is easy to assemble, which is easy to install and replace in the main passage and the bypass passage, and in which a thermostat and a differential pressure valve are integrated.

### SOLUTION TO PROBLEM

According to one aspect of the present invention, a thermostat device to be installed at a branch point between a main passage and a bypass passage includes a thermostat that opens or closes the main passage; a differential pressure valve that opens or closes the bypass passage; and a coupling unit that couples the thermostat and the differential pressure valve. The thermostat includes a first valve seat member that has a first opening for communicating with the main passage; a first valve body that opens or closes the first opening by being separated from or seated on the first valve seat member; a thermo-element including a valve shaft to which the first valve body is fixed, a temperature sensing unit fixed to a base end of the valve shaft and containing a material that expands or contracts in response to temperature, and a piston protruding from a tip of the valve shaft and moving forward or backward in response to expansion or contraction of the material; a first biasing member that biases the first valve body toward a closing direction; and a frame that is fixed to the first valve seat member and supports the first biasing member. The differential pressure valve includes a second valve seat member that has a second opening for communicating with the bypass passage; a second valve body that opens or closes the second opening by being separated from or seated on the second valve seat member; a second biasing member that biases the second valve body toward a closing direction; and a support member that is fixed to the second valve seat member and supports the second biasing member. The coupling unit includes a holder that has a communication hole on its side and has the second valve seat member fixed to its inner periphery; a flange protruding outward from the holder; an engagement part provided in the frame for engaging the flange; and a holder biasing member that biases the holder toward a direction keeping the flange engaged with the engagement part.

In the aspect of the present invention, the holder biasing member may be the first biasing member that presses the flange protruding from the holder to bias it toward the direction keeping the flange engaged with the engagement part.

In the aspect of the present invention, the holder biasing member may be a third biasing member that is different from the first biasing member and the second biasing member and is compressed between the frame and the holder.

In the aspect of the present invention, the thermostat device may further include an auxiliary passage that constantly communicates from the main passage to the bypass passage when the thermostat device is installed.

In the aspect of the present invention, the auxiliary passage may be a gap between an inlet of the bypass passage and the holder inserted into the inlet.

In the aspect of the present invention, the auxiliary passage may be a gap of the second opening which is not closed by the second valve body when the second valve body is seated on the second valve seat member.

The present invention is not limited to the above-described purpose or aspect. A more complete appreciation of the present invention and many of advantages thereof will be readily obtained and understood by reference to the following detailed description when considered in connection with the accompanying drawings.

### BRIEF DESCRIPTION OF DRAWINGS

FIG. 1 is a cross-sectional view of a thermostat device according to a first embodiment of the present invention installed at a branch point between a main passage and a bypass passage;
FIG. 2 is a cross-sectional view of the differential pressure valve according to the first embodiment when the valve is opened;
FIG. 3A is a diagram illustrating a method for assembling the differential pressure valve of the first embodiment, FIG. 3B is a diagram illustrating a method for assembling the thermostat device of the first embodiment, and FIG. 3C is a perspective view of the assembled thermostat device of the first embodiment;
FIG. 4 is a cross-sectional view of a thermostat device according to a second embodiment of the present invention installed at a branch point between a main passage and a bypass passage;
FIG. 5 is a cross-sectional view of a differential pressure valve according to the second embodiment when the valve is opened;
FIG. 6A is a diagram illustrating a method of assembling the differential pressure valve according to the second embodiment, FIG. 6B is a diagram illustrating a method of assembling the thermostat of the second embodiment, FIG. 6C is a diagram illustrating a method of assembling the thermostat device according to the second embodiment, and FIG. 6D is a perspective view of the assembled thermostat device according to the second embodiment; and
FIG. 7A is a perspective view of a thermostat device according to the other embodiment of the present invention, and FIG. 7B is a cross-sectional view taken along line 7B-7B of the thermostat device of FIG. 7A.

### DESCRIPTION OF EMODIMENTS

### FIRST EMBODIMENT

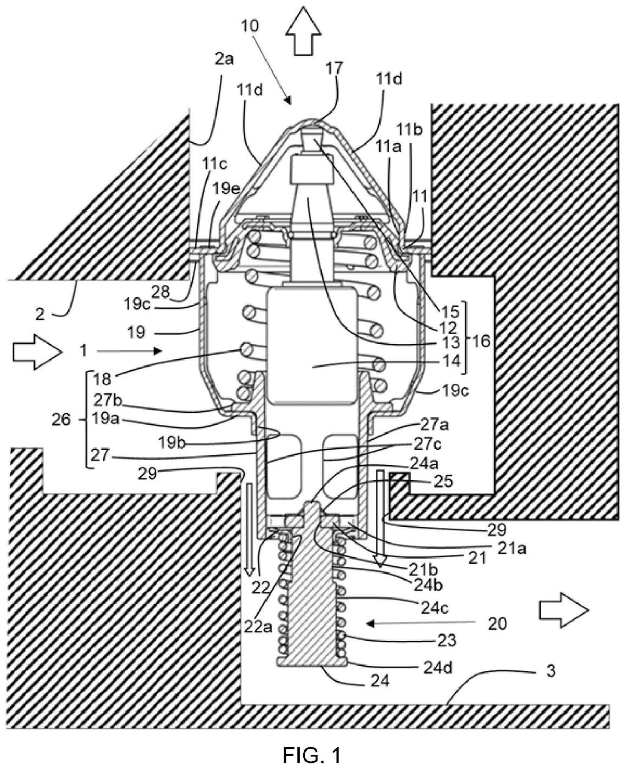

Referring to FIGs. 1 to 3, a thermostat device 1 according to a first embodiment of the present invention will be described. For convenience, the terms "upper", "lower", "left", and "right" used in the description of each embodiment of the present invention refer to the respective "upper", "lower", "left", and "right" in the drawings referenced in the description. The thermostat device 1 is installed and used, for example, in a passage through which a coolant flows to cool an engine of such as an automobile. In FIG. 1, the thermostat device 1 is installed at a branch point that is on an outlet side of the engine and between main passages 2 and 2a for circulating the coolant between the engine and a radiator and a bypass passage 3 for bypassing the radiator and connected in parallel to the main passage 2a. White-filled arrows in FIG. 1 indicate directions in which the coolant flows in the passage 2, a partial passage 2a extending from the branch point of the main passage 2 toward the radiator, and the bypass passage 3.

The thermostat device 1 includes a thermostat 10 that opens or closes the main passages 2 and 2a, a differential pressure valve 20 that opens or closes the bypass passage 3, and a coupling unit 26 that couples the thermostat 10 and the differential pressure valve 20.

The thermostat 10 will be described. The thermostat 10 includes a first valve seat member 11 that has a first opening 11a for communicating with the main passages 2 and 2a, a first valve body 12 that opens or closes the first opening 11a by being separated from or seated on the first valve seat member 11, a thermo-element 16 including a valve shaft 13 to which the first valve body 12 is fixed, a temperature sensing unit 14 fixed to a base end of the valve shaft 13 and containing a material that expands or contracts in response to temperature, and a piston 15 protruding from a tip of the valve shaft 13 and moving forward or backward in response to expansion or contraction of the material, a first biasing member 18 that biases the first valve body 12 toward a closing direction, and a frame 19 that is fixed to the first valve seat member 11 and supports the first biasing member 18.

The first valve seat member 11 includes a cylinder 11b having the first opening 11a on an inner periphery thereof, and an annulus 11c protruding outward from the cylinder 11b. When the first valve body 12 is seated on the annulus 11c of the first valve seat member 11, the first opening 11a is closed, and the coolant does not flow from the main passage 2 to the partial passage 2a. When the first valve body 12 is separated from the annulus 11c, the first opening 11a is opened, and the coolant flows from the main passage 2 through the first opening 11a to the partial passage 2a of the main passage 2.

The first valve body 12 is penetrated by the valve shaft 13 and fixed thereto. The material sealed inside the temperature sensing unit 14 is made of such as wax, which senses the temperature of the coolant around the temperature sensing unit 14 and expands when the temperature rises and contracts when the temperature drops. The piston 15 passes axially through the valve shaft 13. The piston 15 moves forward and backward in response to the expansion and contraction of the material, thereby extending or shortening the length of the piston 15 protruding from the tip of the valve shaft 13.

The piston receiver 17 is located on a central axis of the piston 15 and is supported by a pair of arms 11d extending from positions facing each other of the cylinder 11b of the first valve seat member 11 toward the piston receiver 17. The piston receiver 17 abuts against and presses a tip of the piston 15. As the length of the piston 15 protruding from the tip of the valve shaft 13 increases, the first valve body 12, the valve shaft 13, and the temperature sensing unit 14 move together in a direction away from the first valve seat member 11. On the other hand, as the length of the piston 15 protruding from the tip of the valve shaft 13 decreases, the first valve body 12, the valve shaft 13, and the temperature sensing unit 14 move together in a direction toward the first valve seat member 11.

The first biasing member 18 is, for example, a coil spring. One end of the first biasing member 18 presses the first valve body 12 from the branch point side in a direction to close the first opening 11a. The temperature sensing unit 14 of the thermo-element 16 is inserted into the first biasing member 18.

The frame 19 includes an annular bottom 19a that supports the other end of the first biasing member 18, a bottom opening 19b that opens to the inside of the annular bottom 19a, and a pair of pillars 19c that extend upward from opposing positions of the annular bottom 19a and are fixed to the annulus 11c of the first valve seat member 11. The inside and outside of the frame 19 communicate with each other by the bottom opening 19b and an opening formed between the pair of pillars 19c.

The differential pressure valve 20 will be described. The differential pressure valve 20 includes a second valve seat member 21 that has a second opening 21a for communicating with the bypass passage 3, a second valve body 22 that opens or closes the second opening 21a by being separated from and seated on the second valve seat member 21, a second biasing member 23 that biases the second valve body 22 toward a closing direction, and a support member 24 that is fixed to the second valve seat member 21 and supports the second biasing member 23.

A coupling hole 21b is formed at the center of the second valve seat member 21, and the second opening 21a is formed around the coupling hole 21b. The second valve body 22 is a poppet valve, has a central hole 22a, and is recessed from the outer periphery toward the central hole 21a. The second biasing member 23 is a coil spring, one end of which abuts against the second valve body 22, pressing the second valve body 22 from the bypass passage 3 side in the closing direction.

When the second valve body 22 is seated on the second valve seat 21, the second opening 21a is closed, and the coolant does not flow through the second opening 21a to the bypass passage 3. When the second valve body 22 is separated from the second valve seat 21, the second opening 21a is opened, and the coolant flows through the second opening 21a to the bypass passage 3.

The support member 24 includes, stacked in ascending order of outer diameter, a coupling protrusion 24a that passes through the coupling hole 21b, a second valve body guide 24b that is inserted into the central hole 22a of the valve body 22, a second biasing member guide 24c that is inserted into the second biasing member 23, and a second biasing member holder 24d that supports the other end of the second biasing member 23. The push nut 25 has a press-fit hole 25a at the center thereof. The second valve seat member 21 and the support member 24 are fixed together by press-fitting the coupling protrusion 24a into the press-fit hole 25a.

The coupling unit 26 will be described. The coupling unit 26 includes a holder 27 that has the second valve seat member 21 fixed to an inner periphery of a cylindrical side wall 27a, a flange 27b protruding outward from the holder 27, the annular bottom 19a of the frame 19 that is provided in the frame 19 and constitutes an engagement part with which the flange 27b engages, and the first biasing member 18 that constitutes a holder biasing member that biases the holder 27 in a direction that keeps the flange 27b engaged with the annular bottom 19a that constitutes the engagement part.

The cylindrical side wall 27a of the holder 27 has a plurality of communication holes 27c that communicate with the inside and outside of the holder 27. The second valve seat member 21 is fixed integrally to an inner periphery near a lower end of a side wall 27a of the holder 27. The upper end of the holder 27 is open, and the temperature sensing unit 14 can be inserted into the holder 27. When the temperature sensing unit 14 is inserted into the holder 27, there is a gap between them that serves as a passage through which the coolant flows.

The outer diameter of the side wall 27a of the holder 27 is approximately the same as the inner diameter of the bottom opening 19b of the frame 19. The outer diameter of the annular flange 27b protruding outward near the upper end of the holder 27 is larger than the inner diameter of the bottom opening 19b of the frame 19. The flange 27b engages with the annular bottom 19a of the frame 19, which is the engagement part, so that the holder 27 inserted into the bottom opening 19b is supported by the frame 19.

The first biasing member 18, which constitutes the holder biasing member, presses against the flange 27b protruding from the holder 27, and biases the flange 27b in a direction that keeps the flange 27b engaged with the annular bottom 19a, which constitutes the engagement part. The first biasing member 18 is sandwiched and compressed between the flange 27b supported on the annular bottom 19a of the frame 19 and the first valve body 12.

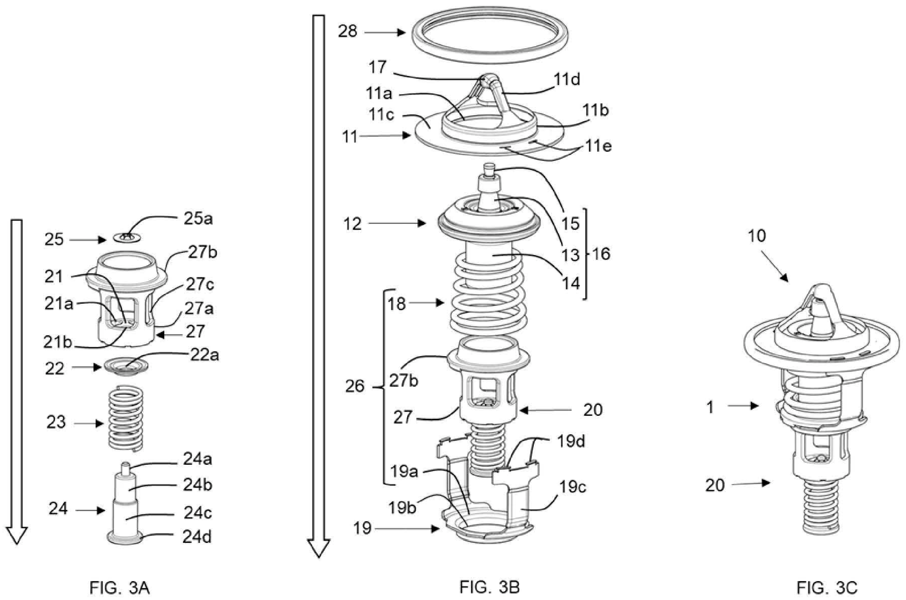

Next, a method for assembling the thermostat device 1 will be described with reference to FIG. 3. As shown in FIG. 3A, after the support member 24 is inserted through the second biasing member 23, the central hole 22a of the second valve body 22, and the coupling hole 21b of the first valve seat member 21, the coupling protrusion 24a is press-fitted into the press-fitting hole 25a of the push nut 25. Thus, the differential pressure valve 20 is integrally formed.

As shown in FIG. 3B and FIG. 3C, the holder 27 of the differential pressure valve 20 is inserted into the bottom opening 19b of the frame 19, and the flange 27b is engaged with the engagement part which is the annular bottom 19a of the frame 19. While the first biasing member 18 is sandwiched and pressed between the flange 27b and the first valve body 12, a protrusion 19d on the tip of the pillar portion 19c of the frame 19 is inserted into a hole 11e provided in the annulus 11c of the first valve seat member 11 and crimped. Furthermore, the gasket 28, made of an elastic material such as rubber, is fitted around the outer periphery of the annulus 11c of the first valve seat member 11. In this way, the thermostat device 1, in which the thermostat 10 and the differential pressure valve 20 are integrated, is assembled.

Next, the operation of the thermostat device 1 will be described. In FIG. 1, the thermostat device 1 is installed at a branch point between the main passage 2 through which the coolant flows from a coolant outlet of the engine toward the radiator and the bypass passage 3. The thermostat 10 is installed near an inlet of the partial passage 2a from the branch point toward the radiator in the main passage 2. The gasket 28 seals the partial passage 2a and the thermostat 10.

The coolant in the main passage 2 flows into the frame 19 through the opening formed between the pair of pillars 19c, or flows into the holder 27 through the communication hole 27c, and then flows through the gap between the holder 27 and the temperature sensing unit 14. Therefore, the entire temperature sensing unit 14 of the thermo-element 16 can sense the temperature of the coolant.

When the differential pressure valve 20 is disposed such that the holder 27 is inserted into the inlet of the bypass passage 3, there is a gap between the inlet of the bypass passage 3 and the holder 27. The gap constitutes an auxiliary passage 29 that allows the main passage 2 and the bypass passage 3 to constantly communicate with each other.

Because the auxiliary passage 29 is provided, the coolant can constantly flow from the main passage 2 through the auxiliary passage 29 to the bypass passage 3, even when the second valve body closes the second opening. The temperature of this coolant can be constantly sensed by the temperature sensing unit 14 of the thermo-element 16.

Furthermore, since it is assumed that the gap is formed between the inlet of the bypass passage 3 and the holder 27, the holder 27 is more likely to tolerate dimensional tolerances in its outer diameter, making design and installation easier.

When the coolant temperature sensed by the temperature sensing unit 14 is less than a predetermined temperature, the wax within the temperature sensing unit 14 contracts, and the length of the piston 15 protruding from the valve shaft 13 is minimized. In this case, the first valve body 12 is seated on the first valve seat member 11 by being pressed by the first biasing member 18, the first opening 11a is closed, and the coolant does not flow from the main passage 2 to the partial passage 2a directed toward the radiator.

In this case, when the pressure of the coolant is extremely small, the second valve body 22 of the differential pressure valve 20 is seated on the second valve seat member 21 by the second biasing member 23 to close the second opening 21a. However, the coolant in the main passage 2 flows through the auxiliary passage 29, which is the gap between the inlet of the bypass passage 3 and the holder 27, to the bypass passage 3.

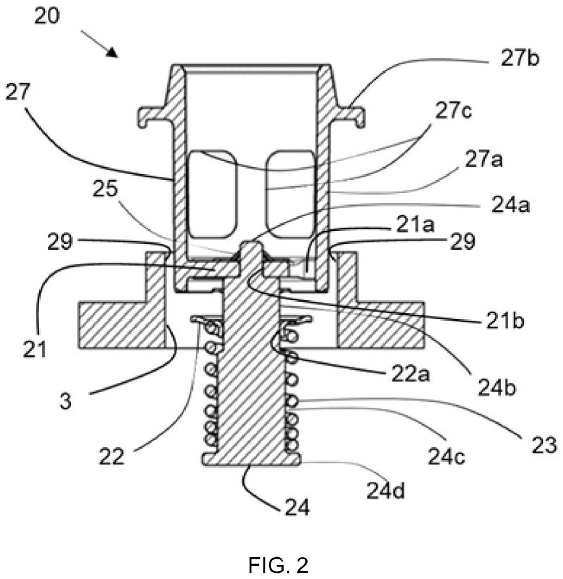

As shown in FIG. 2, when the pressure of the coolant increases, the second valve body 22 is pushed down against the pressing force of the second biasing member 23, and the second opening 21a is opened. The valve opening degree of the differential pressure valve 20 is controlled to a position where the pressure of the coolant and the pressing force of the second biasing member 23 are balanced. Since the coolant flows to the bypass passage 3 through the second opening 21a together with the auxiliary passage 29, the flow rate of the coolant flowing to the bypass passage 3 increases.

When the coolant reaches a predetermined temperature or higher, the wax within the temperature sensing unit 14 sensing the temperature expands, and the length of the piston 15 protruding from the valve shaft 13 is increased, but since the tip of the piston 15 is pressed by the piston receiver 17, the first valve body 12, the valve shaft 13, and the temperature sensing unit 14 are integrally lowered. Therefore, the first valve body 12 descends against the pressing force of the first biasing member 18, and the first opening 11a opens. As a result, the coolant flowing into the frame 19 flows from the first opening 11a through the opening between the pair of arms 11d to the partial passage 2a leading to the radiator of the main passage 2. When the opening amount of the first valve element 12 increases, most of the coolant flows through the partial passage 2a, so that the coolant pressure force to the differential pressure valve 20 decreases, so that the second valve body 22 is seated on the second valve seat member 21 and closes the second opening 21a. A part of the coolant in the main passage 2 flows through the auxiliary passage 29 to the bypass passage 3.

According to the thermostat device 1, the flange 27b, which protrudes outward from the holder 27 to which the second valve seat member 21 of the differential pressure valve 10 is fixed on its inner periphery, engages with the engagement part which is the annular bottom 19a of the frame 19 of the thermostat 10. Furthermore, the first biasing member 18, which is the holder biasing member, presses the flange 27b and biases the flange 27b in a direction keeping it engaged with the annular bottom 19a which is the engagement part. In this way, it is possible to obtain the thermostat device 1, which easily allows dimensional tolerance of components, which is easy to assemble, which is easy to install and replace in the main passage and the bypass passage, and in which the thermostat 10 and the differential pressure valve 20 are integrally coupled.

Furthermore, by modifying an existing thermostat to have a frame with the shape and structure of the frame 19 and further adopting the differential pressure valve 20 and the coupling unit 26, it is possible to easily modify the thermostat device into one that integrates a differential pressure valve.

The thermostat device 1 is easily miniaturized because the holder biasing member is also used by the first biasing member 18, which presses the flange 27b protruding from the holder 27 in a direction that keeps the flange 27b engaged with the engagement part, which is the bottom 19a of the frame 19.

### SECOND EMBODIMENT

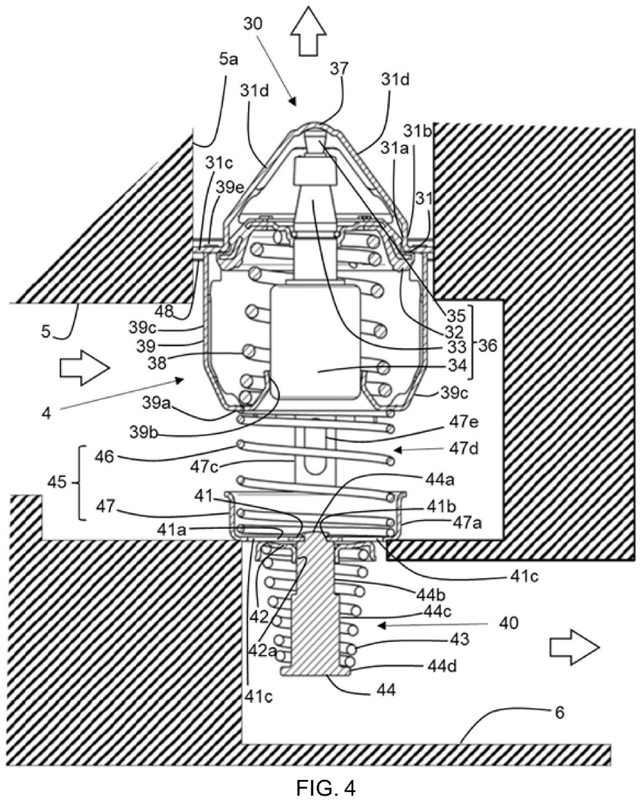

Next, a thermostat device 4 according to a second embodiment of the present invention will be described with reference to FIGs. 4 to 6. In FIG. 4, the thermostat device 4 of the second embodiment is installed at a branch point that is on an outlet side of an engine and between main passages 5 and 5a that circulate the coolant between the engine and a radiator and a bypass passage 6 that bypasses the radiator and is connected in parallel to the main passage 5. White-filled arrows in FIG. 4 indicate directions in which the coolant flows in the main passage 5, a partial passage 5a extending from the branch point of the main passage 5 toward the radiator, and the bypass passage 6.

The thermostat device 4 includes a thermostat 30 that opens or closes the main passages 5 and 5a, a differential pressure valve 40 that opens or closes the bypass passage 6, and a coupling unit 45 that couples the thermostat 30 and the differential pressure valve 40.

The thermostat 30 will be described. The thermostat 30 includes a first valve seat member 31 that has a first opening 31a for communicating with the main passages 5 and 5a, a first valve body 32 that opens or closes the first opening 31a by being separated from or seated on the first valve seat member 31, a thermo-element 36 including a valve shaft 33 to which the first valve body 32 is fixed, a temperature sensing unit 34 fixed to a base end of the valve shaft 33 and containing a material that expands or contracts in response to temperature, and a piston 35 protruding from a tip of the valve shaft 33 and moving forward or backward in response to expansion or contraction of the material, a first biasing member 38 that biases the first valve body 32 toward a closing direction, and a frame 39 that is fixed to the first valve seat member 31 and supports the first biasing member 38.

The first valve seat member 31 includes a cylinder 31b having the first opening 31a on an inner periphery thereof, and an annulus 31c protruding outward from the cylinder 31b. When the first valve body 32 is seated on the annulus 31c of the first valve seat member 31, the first opening 31a is closed, and the coolant does not flow from the main passage 5 to the partial passage 5a. When the first valve body 32 is separated from the annulus 31c, the first opening 31a is opened, and the coolant flows from the main passage 5 through the first opening 31a to the partial passage 5a of the main passage 5.

The first valve body 32 is penetrated by the valve shaft 33 and fixed thereto. The material sealed inside the temperature sensing unit 34 is made of such as wax, which senses the temperature of the coolant around the temperature sensing unit 34 and expands when the temperature rises and contracts when the temperature drops. The piston 35 passes axially through the valve shaft 33. The piston 35 moves forward and backward in response to the expansion and contraction of the material, thereby extending or shortening the length of the piston 35 protruding from the tip of the valve shaft 33.

The piston receiver 37 is located on a central axis of the piston 35 and is supported by a pair of arms 31d extending from positions facing each other of the cylinder 31b of the first valve seat member 31 toward the piston receiver 37. The piston receiver 37 abuts against and presses a tip of the piston 35. As the length of the piston 35 protruding from the tip of the valve shaft 33 increases, the first valve body 32, the valve shaft 33, and the temperature sensing unit 34 move together in a direction away from the first valve seat member 31. On the other hand, as the length of the piston 35 protruding from the tip of the valve shaft 33 decreases, the first valve body 32, the valve shaft 33, and the temperature sensing unit 34 move together in a direction toward the first valve seat member 31.

The first biasing member 38 is, for example, a coil spring. One end of the first biasing member 38 presses the first valve body 32 from the branch point side in a direction to close the first opening 31a. The temperature sensing unit 34 of the thermo-element 36 is inserted into the first biasing member 38.

The frame 39 includes an annular bottom 39a that supports the other end of the first biasing member 38, a bottom opening 39b that opens to the inside of the annular bottom 39a, and a pair of pillars 39c that extend upward from opposing positions of the annular bottom 39a and are fixed to the annulus 31c of the first valve seat member 31. The inside and outside of the frame 39 communicate with each other by the bottom opening 39b and an opening formed between the pair of pillars 39c.

The differential pressure valve 40 will be described. The differential pressure valve 40 includes a second valve seat member 41 that has a second opening 41a for communicating with the bypass passage 6, a second valve body 42 that opens or closes the second opening 41a by being separated from and seated on the second valve seat member 41, a second biasing member 43 that biases the second valve body 42 toward a closing direction, and a support member 44 that is fixed to the second valve seat member 41 and supports the second biasing member 43.

A coupling hole 41b is formed at the center of the second valve seat member 41, and the second opening 41a is formed around the coupling hole 41b. The second valve body 42 is a poppet valve, has a central hole 42a, and is recessed from the outer periphery toward the central hole 41a. The second biasing member 43 is a coil spring, one end of which abuts against the second valve body 42, pressing the second valve body 42 from the bypass passage 3 side in the closing direction.

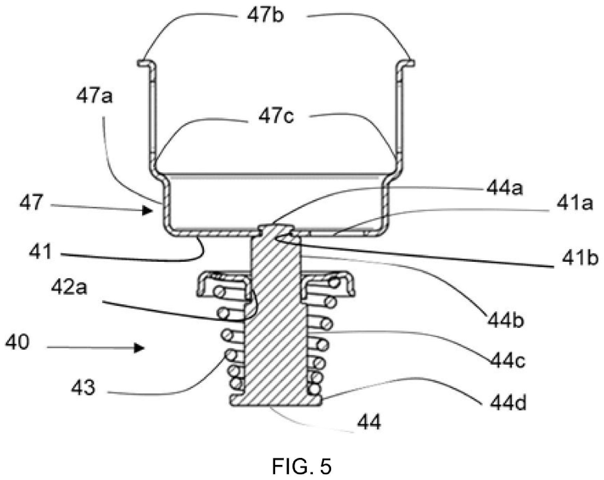

When the second valve body 42 is seated on the second valve seat 41, a gap 41c that is not closed by the second valve body exists in the second opening 41a, and the coolant flows through the gap 41c in the second opening 41a to the bypass passage 3. The gap 41c constitutes an auxiliary passage that constantly communicates from the main passage 5 to the bypass passage 6. As shown in FIG. 5, when the second valve body 42 is separated from the second valve seat 41, the entire second opening 41a is opened. At this time, the coolant flows through the entire second opening 41a to the bypass passage 3.

Even when the second valve body 42 is seated on the second valve seat 41, the gap 41c constituting the auxiliary passage exists, and the coolant constantly communicates from the main passage 5 to the bypass passage 6, so that the temperature sensing unit 34 can constantly sense the temperature of the coolant.

The support member 44 includes, stacked in ascending order of outer diameter, a coupling protrusion 44a that passes through the coupling hole 41b, a second valve body guide 44b that is inserted into the central hole 42a of the valve body 42, a second biasing member guide 44c that is inserted into the second biasing member 43, and a second biasing member receiver 44d that supports the other end of the second biasing member 43.

The coupling unit 45 will be described. The coupling unit 45 includes a third biasing member 46, a holder 47 that has the second valve seat member 41 fixed integrally as a bottom to an inner periphery of a cylindrical side wall 47a, flanges 47b protruding outward from a pair of pillars 47c extending upward from opposing positions on the side wall 47a of the holder 47, and an engagement part 39d that protrudes outward from opposing positions on the annular bottom 39a of the frame 39 and has holes into which the flanges 47b can be inserted and engaged. A communication hole 47d opens between the pair of pillars 47c of the holder 47. The pillars 47c themselves also have a communication hole 47e.

An upper end of the holder 47 is open, and a lower portion of the third biasing member 46 is housed within the holder 47. The third biasing member 46 is sandwiched and compressed between the annular bottom 39a of the frame 39 and the bottom of the holder 47. The third biasing member 46 constitutes a holder biasing member that biases the holder 47 in a direction that keeps the flanges 47b of the holder 47 engaged with the engagement part 39d of the frame 39.

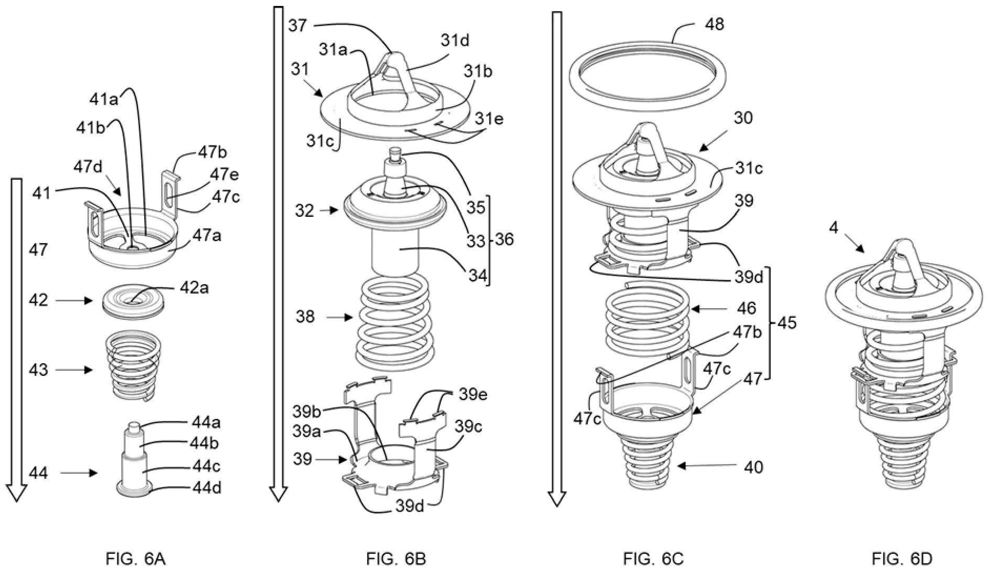

Next, a method for assembling the thermostat device 4 will be described with reference to FIG. 6. As shown in FIG. 6A, the support member 44 is inserted through the second biasing member 43, the central hole 42a of the second valve body 42, and the coupling hole 41b of the second valve seat member 41 fixed integrally as the bottom of the holder 47. The second valve seat member 41 integrated with the holder 47 is fixed to the support member 44 by roll crimping to crush and spread the coupling protrusion 44a. In this way, the differential pressure valve 40 integrated with the holder 47 is assembled.

Furthermore, as shown in FIG. 6B, the first biasing member 38 is supported on the bottom 19a of the frame 19, and the temperature sensing unit 34 of the thermo-element 36 is inserted into the bottom opening 39b of the frame 39. The first biasing member 38 is sandwiched and pressed between the first valve body 32, which is fixed to the valve shaft 33, and the bottom 19a. Protrusions 39e provided at the tip of the pillars 39c of the frame 39 are inserted into holes 31e provided in the annulus 31c of the first valve seat member 31 and crimped. In this way, the thermostat 30 is assembled.

Next, as shown in FIG. 6C, the third biasing member 46 is sandwiched and compressed between the holder 47 integrated with the differential pressure valve 40 and the frame 39 of the thermostat 30. After the pair of pillars 47c of the holder 47 are elastically deformed and the flanges 47b are inserted into the hole of each engagement part 39d of the frame 39, the elastic deformation is released, and the hooks 47b is engaged on the engagement part 39d. The third biasing member 46, as the holder biasing member, biases the hooks 47b in a direction that keeps them engaged with the engagement part 39d. A gasket 48 made of an elastic material such as rubber is fitted to the outer periphery of the annulus 31c. In this way, as shown in FIG. 6D, the thermostat device 4 in which the thermostat 30 and the differential pressure valve 40 are integrated is assembled.

As shown in FIG. 4, when the thermostat device 4 is installed, the thermostat 30 is fixed to the partial passage 5a of the main passage 5, and the thermostat 30 and the partial passage 5a are sealed by the gasket 48.

The differential pressure valve 40 of the thermostat device 4 is inserted into an inlet of the bypass passage 6. The holder 47 integrated with the differential pressure valve 40 is grounded to the main passage 5 around the inlet of the bypass passage 6 while being pressed by the third biasing member 46. At this time, the flange 47b is designed so as not to be in contact with the engagement part 39d while being inserted into the hole of the engagement part 39d, that is, to be in a state of floating from the engagement part 39d. Therefore, even when the position of the flange 47b or the engagement part 39d deviates due to the dimensional tolerance, this can be permitted. Furthermore, as long as the differential pressure valve 40 is inserted into the inlet of the bypass passage 6 and the holder 47 is grounded to the main passage 5 around the inlet while being pressed by the third biasing member 46, dimensional tolerances can be tolerated even if there are dimensional tolerances in the inner diameter of the inlet of the bypass passage 6 and the seating position of the holder 47, or if there are dimensional tolerances in the outer diameter of the differential pressure valve 40 and the outer diameter and height of the holder 47.

Next, the operation of the thermostat device 4 will be described. In FIG. 4, the coolant in the main passage 5 flows into the frame 39 through the opening formed between the pair of pillars 39c, or flows into the holder 47 through the communication holes 47d and 47e. Therefore, the entire temperature sensing unit 34 of the thermo-element 36 can sense the temperature of the coolant.

When the coolant temperature sensed by the temperature sensing unit 34 is less than a predetermined temperature, the wax in the temperature sensing unit 34 contracts, and the length of the piston 35 protruding from the valve shaft 33 is minimized. In this case, the first valve body 32 is seated on the first valve seat member 31 by being pressed by the first biasing member 38, the first opening 31a is closed, and the coolant does not flow from the main passage 5 to the partial passage 5a directed toward the radiator.

In this case, when the pressure of the coolant is extremely small, the second valve body 42 of the differential pressure valve 40 is seated on the second valve seat member 41 by the second biasing member 43, but the second opening 41a has a gap 41c that is not closed by the second valve body 42. The coolant in the main passage 5 flows into the bypass passage 3 through the auxiliary passage 49 formed by the gap 41c.

As shown in FIG. 5, when the pressure of the coolant increases, the second valve body 42 is pushed down against the pressing force of the second biasing member 43, and the second opening 41a opens. The valve opening degree of the differential pressure valve 40 is controlled at a position where the pressure of the coolant and the pressing force of the second biasing member 43 are balanced. The flow rate of the coolant flowing through the second opening 41a to the bypass passage 6 increases.

When the coolant reaches a predetermined temperature or higher, the wax within the temperature sensing unit 34 sensing the temperature expands, and the length of the piston 35 protruding from the valve shaft 33 is increased, but since the tip of the piston 35 is pressed by the piston receiver 37, the first valve body 32, the valve shaft 33, and the temperature sensing unit 34 are integrally lowered. Therefore, the first valve body 32 descends against the pressing force of the first biasing member 38, and the first opening 31a opens. As a result, the coolant flowing into the frame 39 flows from the first opening 31a through the opening between the pair of arms 31d to the partial passage 5a leading to the radiator of the main passage 5. When the opening amount of the first valve body 32 increases, most of the coolant flows through the partial passage 5a, so that the coolant pressure force to the differential pressure valve 40 is reduced, so that the second valve body 42 is seated on the second valve seat member 41. Since the second opening 41a has a gap 41c that is not closed by the second valve body 42, a part of the coolant in the main passage 5 flows into the bypass passage 3 through the auxiliary passage 49 formed by the gap 41c.

According to the thermostat device 4, the flanges 47b, which protrude outward from the holder 47 to which the second valve seat member 41 is fixed, engage with the engagement part 39d provided on the frame 39. Furthermore, the third biasing member 38, which is the holder biasing member, is sandwiched and compressed between the frame 39 and the holder 47 and biases the flanges 47b in a direction keeping it engaged with the engagement part 39b. In this way, it is possible to obtain the thermostat device 4, which easily allows dimensional tolerance of components, which is easy to assemble, which is easy to install and replace in the main passage and the bypass passage, and in which the thermostat 30 and the differential pressure valve 40 are integrally coupled.

Furthermore, by modifying an existing thermostat to have a frame with the shape and structure of the frame 39 and further adopting the differential pressure valve 40 and the connecting unit 45, it is possible to easily modify the thermostat device into one that integrates a differential pressure valve.

The present invention is not limited to the above-described embodiment and includes various modifications and equivalents included in the scope of the technical idea of the present invention and the constituent elements thereof.

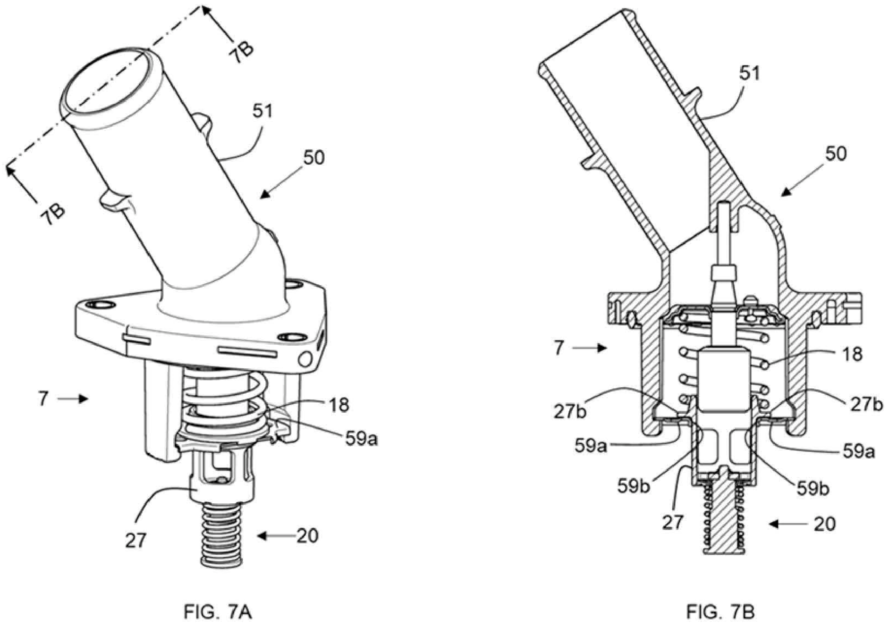

For example, as shown in FIG. 7, a thermostat device 7 according to the other embodiment of the present invention includes a thermostat 50, which has a housing 51 that integrates a first valve seat member, a piston receiver and a frame, and a differential pressure valve 20, in which the holder 27 of the first embodiment of the present invention is integrated, are integrally coupled by a coupling unit 60. The coupling unit 60 includes the holder 27, the flange 27b protruding outward from the holder 27, a bottom frame 59a that can be fixed to the housing 51 and constitutes an engagement part with which the flange 27b is engaged when the holder 27 is inserted into the opening 59b, and the first biasing member 18 that constitutes a holder biasing member that biases the flange 27b of the holder 27 in a direction that keeps the flange 27b engaged with the bottom frame 59a, which is the engagement part.

### INDUSTRIAL AVAILABILITY

The present invention can be used in a thermostat device that is installed in such as an engine coolant circuit of an automobile.

### REFERENCE SIGNS LIST

- 1, 4, 7: thermostat device
- 2, 2 a, 5, 5a: main passage
- 3, 6: bypass passage
- 10, 30, 50: thermostat
- 11, 31: first valve seat member
- 11a, 31a: first opening
- 12, 32: first valve body
- 13, 33: valve shaft
- 14, 34: temperature sensing unit
- 15, 35: piston
- 16, 36: thermo-element
- 18: first biasing member (holder biasing member)
- 19, 39: frame
- 19a, 39d, 59a: engagement part
- 20, 40: differential pressure valve
- 21, 41: second valve seat member
- 21a, 41a: second opening
- 22, 42: second valve body
- 23, 43: second biasing member
- 24, 44: support member
- 25: push nut
- 26, 45, 60: coupling unit
- 27,47: holder
- 27a, 47d, 47e: communication hole
- 27b, 47b: flange
- 38: first biasing member
- 46: third biasing member (holder biasing member)

## Claims

1. A thermostat device to be installed at a branch point between a main passage and a bypass passage comprising:
a thermostat that opens or closes the main passage;
a differential pressure valve that opens or closes the bypass passage; and
a coupling unit that couples the thermostat and the differential pressure valve,
wherein the thermostat comprises:
a first valve seat member that has a first opening for communicating with the main passage;
a first valve body that opens or closes the first opening by being separated from or seated on the first valve seat member;
a thermo-element comprising a valve shaft to which the first valve body is fixed, a temperature sensing unit fixed to a base end of the valve shaft and containing a material that expands or contracts in response to temperature, and a piston protruding from a tip of the valve shaft and moving forward or backward in response to expansion or contraction of the material;
a first biasing member that biases the first valve body toward a closing direction;
and
a frame that is fixed to the first valve seat member and supports the first biasing member,
wherein the differential pressure valve comprises:
a second valve seat member that has a second opening for communicating with the bypass passage;
a second valve body that opens or closes the second opening by being separated from or seated on the second valve seat member;
a second biasing member that biases the second valve body toward a closing direction; and
a support member that is fixed to the second valve seat member and supports the second biasing member, and
wherein the coupling unit comprises:
a holder that has a communication hole on its side and has the second valve seat member fixed to its inner periphery;
a flange protruding outward from the holder;
an engagement part provided in the frame for engaging the flange; and
a holder biasing member that biases the holder toward a direction keeping the flange engaged with the engagement part.

2. The thermostat device according to claim 1, wherein the holder biasing member is the first biasing member that presses the flange protruding from the holder to bias it toward the direction keeping the flange engaged with the engagement part.

3. The thermostat device according to claim 1, wherein the holder biasing member is a third biasing member that is different from the first biasing member and the second biasing member and is compressed between the frame and the holder.

4. The thermostat device according to claim 1, further comprising an auxiliary passage that constantly communicates from the main passage to the bypass passage when the thermostat device is installed.

5. The thermostat device according to claim 4, wherein the auxiliary passage is a gap between an inlet of the bypass passage and the holder inserted into the inlet.

6. The thermostat device according to claim 4, wherein the auxiliary passage is a gap of the second opening which is not closed by the second valve body when the second valve body is seated on the second valve seat member.
